# EUROPÄISCHE PATENTSCHRIFT

(11) **EP 1 401 781 B1**
(45) Veröffentlichungstag und Bekanntmachung des Hinweises auf die Patenterteilung: **22.08.2012**
(21) Anmeldenummer: 02754229.9
(22) Anmeldetag: 18.06.2002
(51) Int. Cl.: C03C 11/00, C23D 5/00

(54) **BESCHICHTUNG MIT ANORGANISCHEN SCHÄUMEN ZUM THERMISCHEN ISOLIEREN VON GERÄTEN**
COATING WITH INORGANIC FOAMS FOR THERMALLY INSULATING DEVICES
REVETEMENT PAR MOUSSES INORGANIQUES POUR LE CALORIFUGEAGE D'APPAREILS

(30) Priorität: 18.06.2001 DE 10129200
(43) Veröffentlichungstag der Anmeldung: 31.03.2004
(73) Patentinhaber: BSH Bosch und Siemens Hausgeräte GmbH, 81739 München (DE)
(72) Erfinder: JÖRDENS, Frank, 83278 Traunstein (DE); SALOMON, Jürgen, 83308 Trostberg (DE); SCHMIDMAYER, Gerhard, 83093 Bad Endorf (DE); WALTER, Bernhard, 89278 Nersingen (DE)
(86) Internationale Anmeldenummer: PCT/DE2002/002218
(87) Internationale Veröffentlichungsnummer: WO 2002/102734

(56) Entgegenhaltungen:
- DE-A- 2 948 778
- DE-A- 3 603 968
- DATABASE WPI Section Ch, Derwent Publications Ltd., London, GB; Class J09, AN 1973-20850U XP002223180 & JP 48 010610 B (NISSAN CHEM IND LTD)
- PATENT ABSTRACTS OF JAPAN vol. 1998, no. 14, 31. Dezember 1998 (1998-12-31) & JP 10 254270 A (CANON INC), 25. September 1998 (1998-09-25)

## Beschreibung

Die vorliegende Erfindung betrifft ein Verfahren, wärmetechnisch beanspruchte Bauteile, Geräte, Maschinen, Anlagen und Geräteteile auf ökonomische und ökologische Weise gegen Wärmedurchgang zu isolieren. Die vorliegende Erfindung betrifft auch auf diese Weise isolierte Bauteile, Geräte, Maschinen, Anlagen und Geräteteile, insbesondere Temperatur belastete Teile eines KFZ, große und kleine Hausgeräte und deren Zubehör, insbesondere Öfen, Backofenmuffeln, Backkästen, Backraumteiler, Mulden und ähnliche Kochstellen, Toaster, Friteusen, Heizungen, die auf Grund der auftretenden Temperaturen eine Isolierung mit Kunststoffen ausschließen. Grundsätzlich können aber beliebige Körper oder die schon genannten Temperatur belasteten Teile von KFZ erfindungsgemäß thermisch isoliert werden.

Anorganische Schäume, auch solche auf der Basis von Glas, sind aus dem Stand der Technik bekannt und werden zur thermischen Isolierung verwendet. Glas ist grundsätzlich ein schlechter Wärmeleiter und wird durch das Einbringen insbesondere geschlossener, Gas gefüllter Poren in seiner Isolationswirkung noch verstärkt. So sind verschiedene Methoden bzw. Materialien bekannt, die heute verwendet werden, um thermisch beanspruchte Bauteile und Geräte wie Backofenmuffeln zu isolieren. Zum Beispiel beschreibt die DE-A 42 15 468 einen wenig flexiblen biegezugfesten Verbunddämmstoffkörper, hergestellt aus einem anorganischen bzw. organischen Dämmstoff durch dessen Umschäumung mit einer Suspension aus Alkaliwasserglas, mineralischen Füllstoffen und einem Treibmittel. Der anorganische bzw. organische Dämmstoff kann z.B. Glasfaser, Aluminiumsilikatfaser oder Schaumglas bzw. Polyurethan-Schaum sein.

Eine Alternative sind Wärme dämmende Formkörper aus Blähglas, wie sie in der DE-A 198 08 115 beschrieben werden. Diese Formkörper bestehen aus gebundenen offenporigen (offen-zelligen) Blähglas-Granulat. Wärme isolierende Fliesen und Kacheln sind in der EP-A 0 305 193 beschrieben. Ein verglasbares Mineral und ein Treibmittel werden in Form einer Kachel/Fliese gegossen. Diese Kachel/Fliese besitzt nach der thermischen Behandlung eine geschlossen-porige Struktur, und kann zur Wärmedämmung verwendet werden.

Die DE-A 29 48 778 beschreibt ein Verfahren zur Herstellung einer mit Glasschaum beschichteten Metallfolie. Dabei wird ein Glasrohstoff (Wasserglas) mit einem Treibmittel (Wasser) und Additiven auf das Bauteil aufgetragen. Anschließend wird der Glasrohstoff mittels Erhitzen aufgeschäumt. Der thermisch isolierte Bauteil findet eine Anwendung in der Muffel eines Back- oder Bratofens.

In Database WPI Section Ch, Derwent Publications Ltd., London, GB; Class J09, AN 1973-20850U XP002223180 & JP-B 48 010610 wird ein Bauteil zur Verwendung in Wänden oder Decken von Öfen oder Reaktionsgefäßen offenbart, der eine anorganische Schaumbeschichtung auf einem Substrat umfasst. Der Bauteil wird durch ein Verfahren hergestellt, wobei eine Lösung eines Glasrohstoffs mit einem Treibmittel und einem Additiv auf eine erhitzte Oberfläche gegeben wird, wodurch eine Schaumbeschichtung gebildet wird.

Die DE-A 36 03 968 zeigt eine keramische Kachel, die mit einer Isoliermasse aus Schaumglas beschichtet ist. Zur Erzeugung des beschichteten Bauteils wird ein Gemisch aus Glasrohstoffen zusammen mit Verschäumungsmitteln und gegebenenfalls Füllstoffen auf die Kachel aufgetragen. Das Werkstück wird auf 800 °C aufgeheizt und wieder abgekühlt, wobei die Bildung einer gleichmäßig verteilten Porenstruktur beachtet, und eine gute Haftung des Schaumglases an der Rückseite der Kachel erhalten wird.

Im Patent Abstracts of Japan Bd. 1998, Nr. 14, 31. Dezember 1998 (1998-12-31) & JP-A 10 254270 wird ein Ofenteil offenbart, der eine Schutzschicht aus Schaumglas aufweist.

Die AT-E 24 600 beschreibt Backöfen, die durch Muffeln begrenzt werden, deren Seitenwände mit einem wärmeisolierenden Material bedeckt sind. Dieses wärmeisolierende Material stellt den Kern des Chassis des Backofens und nimmt an der Bildung einer Struktur teil, die zumindest zum Teil die Außenwände des Backofens darstellt. Dabei ist der Kern des Chassis durch Aufgießen des wärmeisolierenden Materials fest mit den Seitenwänden der Muffel oder einer primären Isolierschicht verbunden.

Das wärmeisolierende Material kann gemäß einer Ausführungsform in Schaumform vorliegen, wobei der Schaum aus organischen Harzen bestehen oder auf der Basis von expandierten mineralischen Materialien hergestellt sein kann. Es kann durch Gießen oder Spritzguß eines Schaums erhalten werden, der geeignete thermische und mechanische Eigenschaften hat.

Eine zweite Ausführungsform der beschriebenen Erfindung beschreibt eine Backofenmuffel, deren Seitenwände mit einer Primärisolierung bedeckt sind, die mehrere Schichten aufweisen kann. Beispiele solcher Schichten sind Polster auf der Basis von Mineralfasern, (SiO₂-Tonerde, Glaswolle, Steinwolle), das durch Aufflocken aufgebracht oder in Platten vorgefertigt sein kann. Alternativ kann die Primärisolierung auch aus pulverförmigen Materialien, die komprimiert sind und durch Textilumhüllungen gehalten werden, aus Mineralschäumen, Granulaten expandierten Glimmers oder anderen Granulaten bestehen.

Nachteilig an den Isolierungen, wie sie in der AT-E 24 600 beschrieben sind, ist, daß sie entweder keine genügend hohe Wärmebeständigkeit haben (z.B. organische Harze) oder durch z.B. Textilumhüllungen gehalten werden (pulverförmige Materialien), wobei die Textilumhüllungen wiederum keine ausreichende Wärmebeständigkeit aufweisen. Ein weiterer Nachteil besteht darin, daß die Primärisolierung keine feste und unmittelbare Haftung auf der Muffel hat. Deshalb wird die Textilumhüllung vorgeschlagen. Alternativen zur Fixierung des z.B. expandierten Materials auf der zu isolierenden Oberfläche sind nicht beschrieben.

Wiederum eine andere Möglichkeit wurde für Kochtöpfe beschrieben (DE-A 100 19 968). Diese werden doppelwandig ausgebildet, der Zwischenraum weist einerseits einen Unterdruck auf, ist andererseits aber gefüllt mit einem feinporigen Wärme isolierenden Material (Schaumglas-Granulat, pyrogene Kieselsäure bzw. ein Gemisch der beiden). Hierbei handelt es sich um eine Schüttung/Pressung der Granulate, die stets eine offene Porosität zur Folge hat und daher einem hohen Wärmedurchgangswiderstand abträglich ist.

Diese Möglichkeiten der anorganischen Isolierung zeichnen sich alle dahin gehend aus, daß ihnen entweder die Flexibilität fehlt, die nötig wäre, um sie nahtlos an das zu isolierende Bauteil Gerät, Maschine, Anlage oder Geräteteil anzupassen, insbesondere in solchen Fällen, in denen das Bauteil etc. sperrige Formen, Bombierungen, Rippen, Stege oder ab-/vorstehende Teile aufweist (wie z.B. eine Backofenmuffel), und im Fall von aufgegossenen Schäumen (z.B. Schaumglas-Granulat), wenn wegen des Anteils an Binder eine gute Wärmeisolierung fehlt. Auch anorganische Fasermatten, die flexibel um das Bauteil gelegt werden, sind nicht in der Lage, sich ideal anzupassen. Weiterhin werden auch bei Verwendung der Matten hervorstehende Teile, die als Wärmebrücke dienen können, nicht geschützt.

Eine Schalentechnik mit starren anorganischen Werkstoffen ist daher auch nicht ideal. Die Bauteile und die Schalen besitzen Fertigungstoleranzen. Es treten daher u.a. infolge der Toleranzen unerwünschte Luftspalte auf, die die Isolierung erheblich beeinträchtigen können. Weiterhin ist eine Schalentechnik infolge der Gerätevielfalt/Typen nicht wirtschaftlich.

Handelt es sich dabei um ein Bauteil, Gerät, Geräteteil, um eine Maschine oder Anlage, das/die Temperaturen von nicht mehr als ca. 300°C ausgesetzt wird, lassen sich Bauteil, Gerät, Geräteteil, Maschine oder Anlage mit organischen Schäumen (z.B. Polyimid, das eine Dauerbelastung bei max. 300°C verträgt, aber sehr teuer ist) direkt beschichten (AT-E 24 600). Allerdings ist es in der Praxis schwierig, aus organischen Schäumen gleichmäßige Strukturen zu spritzen. Deshalb bieten sich bei komplexen Oberflächen wie auch bei Temperaturen (denen das Bauteil, Gerät, Geräteteil, die Maschine oder Anlage im Dauerbetrieb ausgesetzt wird) oberhalb ca. 300°C heute lediglich Mineralfaser-Matten an. Diese passen sich aber auch nicht ideal an und sind außerdem auf Grund der enthaltenen Fasern (unangenehme Verarbeitung, auch der Kunde wünscht faserfreie Produkte) wenig erwünscht. Weiterhin kann die Verarbeitung von Mineralfaser-Matten kostenintensiv sein, da Personal zum Anbringen der Matten benötigt wird.

Der Nachteil des Standes der Technik geht somit letztlich darauf zurück, dass Kunststoffe auf z.B. PU-Basis nicht über 140°C belastbar sind. Selbst Hochleistungskunststoff-Schäume gehen nur bis max. 300°C Dauerbelastung. Insbesondere im Backrohr und an Kochfeldem treten aber Temperaturen oberhalb von 400°C auf. Daher sind für solche Zwecke keine üblichen Kunststoffe einsetzbar.

Die Erfinder der vorliegenden Erfindung haben sich daher die Aufgabe gestellt, einen Ausweg aus dieser technisch unbefriedigenden Situation zu finden und damit die Möglichkeit zu schaffen, wärme-/kältetechnisch beanspruchte Bauteile, Geräte, Maschinen, Anlagen und Geräteteile zur Verfügung zu stellen, die eine deutlich verbesserte Isolation aufweisen und somit dazu beitragen, beim Gebrauch den Energieverbrauch herab zu setzen.

Die Aufgabe haben die Erfinder der vorliegenden Erfindung durch ein Verfahren gemäß Anspruch 1 bzw. ein Gerät gemäß Anspruch 10 gelöst, indem sie Bauteile, Geräte, Geräteteile, Maschinen oder Anlagen zur Verfügung stellen, die mit anorganischem Isolationsmaterial beschichtet sind und auch oberhalb 300°C einsetzbar sind, die weiterhin faserfrei sind, bei denen die Isolation infolge der Beschichtungstechnik (Naßauftrag oder Pulverauftrag) ohne Luftspalte beliebigen geometrischen Formen folgen kann, und die deshalb schließlich, wie gewünscht, eine deutlich verbesserte Isolation aufweisen. Dazu werden anorganische Schaumbeschichtungen auf der Basis von Glas/glasartigen Werkstoffen unter solchen Bedingungen dauerhaft auf das zu isolierende Bauteil, Gerät, Geräteteil, auf die Maschine bzw. Anlage aufgebracht, daß die Beschichtung einerseits eine gute Isoliereigenschaft aufweist, daß sie andererseits auf ihrer Unterlage gut haftet und auch thermische Dehnungen mitmacht. Als Treibmittel zur Porenbildung in der Schaumbeschichtung wird Silikonharz, das vorzugsweise in Wasser dispergierbar ist, oder eine oligomere oder monomere Vorstufe von diesen (Silane, die wenigstens eine Si-C-Bindung aufweisen, die sich bei Temperaturen um T_{g}, also in bevorzugter Weise bei 400 bis 600°C, zersetzen, da T_{g} der meisten Emails in diesem Bereich liegt) verwendet. Dabei erhält das zu isolierende Gerät/Geräte-Bauteil/die zu isolierende Maschine/Anlage erfindungsgemäß eine (isolierende) Schaumbeschichtung mit einer Dicke von 1 bis 30 mm, vorzugsweise 2 bis 15 mm, besonders bevorzugt 3 bis 10 mm. Dabei ist zu beachten, daß die Schichtdicke in der Regel sehr flexibel gehalten bzw. in Abhängigkeit davon ausgewählt werden kann, welche Isolationswirkung erzielt werden soll. Der Vorteil der erfindungsgemäßen anorganischen Schaumbeschichtung auf Glasbasis besteht darin, daß sie geschlossen-zellig/-porig (Porosität im Bereich von 75-95%, insbesondere 80-90%) und Gas dicht hergestellt werden kann. Mit anderen Worten, mit Gas (z.B. aus dem Treibmittel) gefüllte Poren geben ihren Gasgehalt nicht mehr nach außen ab, nehmen aber auch keine Luft aus der Umgebung auf. Da sich die Poren und das Gas aus dem Treibmittel erst bei den Verarbeitungs-/ Brand-Brenntemperaturen bilden und die Schaumbeschichtung anschließend abgekühlt wird, ergibt sich nach der allgemeinen Gasgleichung (pV = nRT) bei Absenkung der Temperatur (von z.B. 873 K auf 295 K) eine Druckminderung um ca. 2/3 (vorausgesetzt, das Volumen, in diesem Fall der geschlossenen, Pore bliebe konstant; dies ist zwar nicht der Fall, es wird sich aber nicht auf nur 1/3 reduzieren), also ein Unterdruck. Da die Wärmeleitfälügkeit der Gase mit dem Druck sinkt, wird der gewünschte Effekt, nämlich eine verbesserte Isolierwirkung, um so besser erzielt. Das Vorhergesagte macht auch deutlich, daß die Isolierwirkung der erfindungsgemäßen Schaumbeschichtung besser sein kann als die vergleichbarer geschlossen-zelliger Kunststoffschäume. Vorzugsweise sind mindestens 50%, besonders bevorzugt 75% der Poren geschlossen-zellig (und weisen einen Unterdruck auf).

Gemäß einer bevorzugten Ausführungsform ist der Schaum der Beschichtung mit einem anorganischen Wärme dämmendem Granulat (z.B. Schaumglas-, Perlite-, Blähton-Granulat, z.B. Vermiculit) oder Hohlglaskugeln gefüllt.

Weiterhin bevorzugt ist es, die Beschichtung zu lackieren, da sie aufgrund ihrer Oberflächenstruktur, die homogen und überwiegend geschlossen ist, eine lackierbare Oberfläche aufweist. Der zum Lackieren verwendete Lack muß hitzebeständig sein. Besonders bevorzugt sind Aluminiumpigment enthaltende Lacke, da sie die IR-Reflektion der Beschichtung erhöhen können.

Gerät/Geräte-Bauteil, Maschine bzw. Anlage im Sinn der vorliegenden Erfindung sind alle Gegenstände im weitesten Sinn, die thermisch gegenüber ihrer Umgebung isoliert werden müssen bzw. können, um auf diese Weise den Energiebedarf, der für die Erwärmung/das Erhitzen, das Warmhalten oder Abkühlen des Geräts/Geräte-Bauteils bzw. der Maschine/Anlage nötig ist, zu reduzieren. Ebenso soll die Umgebung (wie z.B. angrenzende Möbel im Küchenbereich) gegen Wärme/Kälte geschützt werden. Allgemein handelt es sich bei einem Gerät/Geräte-Bauteil bzw. Maschine/Anlage um ein Teil, das bei einer von der Raumtemperatur verschiedenen Betriebstemperatur arbeitet, vorzugsweise bei oberhalb 150°C, wobei es sich also um Kühl- oder Heizgeräte bzw. bei Wärme oder Kälte arbeitende Teile handeln kann. Gemäß einer bevorzugten Ausführungsform der vorliegenden Erfindung handelt es sich bei den Geräten/Geräte-Bauteilen/Maschinen/Anlagen um Temperatur belastete Teile eines KFZ, um große und kleine Hausgeräte und deren Zubehör. Dazu zählen erfindungsgemäß Öfen, Backoferumuffeln, Backkästen, Backraumteiler, Mulden und ähnliche Kochstellen, Toaster, Friteusen und Heizungen, die auf Grund der auftretenden Temperaturen eine Isolierung mit Kunststoffen ausschließen. Grundsätzlich können aber beliebige Körper oder auch die schon genannten Temperatur belasteten Teile von KFZ isoliert werden. Gemäß einer besonders bevorzugten Ausführungsform der vorliegenden Erfindung handelt es sich um eine Backofenmuffel oder um einen Backraumteiler.

Die zu beschichtende Oberfläche wird nachfolgend auch als Substrat-Oberfläche bezeichnet. Grundsätzlich kann diese erfindungsgemäß aus den verschiedensten Materialien bestehen. Praktischer Weise handelt es sich dabei bevorzugt jedoch um metallische Oberflächen, da diese die Arbeitstemperatur ohne Verformungen oder sonstige Beeinträchtigungen ihrer Funktionsfähigkeit aushalten können. Die Backofenmuffel des Elektroherdes muss z.B. Temperaturen von etwa 300 - 400°C, lokal sogar bis etwa 500°C, ggf. dauerhaft, aushalten können, da die am Herdschalter eingestellte Temperatur die Lufttemperatur in der Backrohrmitte bezeichnet, die Oberflächentemperatur der Muffelwände aber entsprechend höher liegt. Generell liegen die maximalen Oberflächentemperaturen von Heizungen in Haus- und Küchengeräten bei bis zu 800°C, insbesondere 200-700°C.

Es sollte sich für den Fachmann von selbst verstehen, welche Seite der Gerätewand erfindungsgemäß beschichtet werden muss. Bei einer Backofenmuffel ist es z.B. die Außenseite, das heißt, die Seite, die dem Herdgehäuse zu gewandt ist.

Für eine gute Isolationswirkung bei möglichst geringer Dicke der Schaumbeschichtung (des Schaums bzw. Glasschaums) ist es wesentlich, dem Glasrohstoff ein oder mehrere Treibmittel zuzusetzen. Dabei sollte das Treibmittel in dem Ausgangsgemisch möglichst homogen verteilt vorliegen, damit sich beim Aufschäumen (Erhitzen) des Gemisches aus Glasrohstoff, Treibmittel und anderen Beimischungen (siehe weiter unten) eine gleichmäßige Bläschen-/Porenbildung und somit eine optimale Isolationswirkung ergeben kann. Es ist von Vorteil, wenn sich beim Schäumungsprozess selbst möglichst viele Bläschen bilden, und diese sich nicht auf unkontrollierte Weise miteinander verbinden. Ein/e mit einem Glasschaum, der eine möglichst gleichmäßige Verteilung der Bläschen und auch ihrer Größe aufweist, versehene/s Gerät/Geräte-Bauteil/Maschine/Anlage stellt eine besonders bevorzugte Ausführungsform der vorliegenden Erfindung dar. Weiterhin ist besonders bevorzugt, daß der Schaum/die Schaumbeschichtung geschlossen-zellig ist, das heißt, daß isolierte Bläschen/Zellen vorliegen.

Im Falle von offenporigen Schaumbeschichtungen, die sich ebenfalls nach dem erfindungsgemäßen Verfahren herstellen lassen, erhält man eine zur Mineralwolle vergleichbare Wärmeisolationswirkung, da diese ebenfalls eine offene Struktur besitzt.

Treibmittel sind erfindungsgemäß solche Substanzen, die bei bzw. etwas oberhalb T_{g} (Glastransformationstemperatur bzw. -temperaturbereich) Gase freisetzen, die in dem erweichenden Glas bzw. in der Glasschmelze für die Bildung von Gasbläschen sorgen. Bevorzugt sind solche Treibmittel, die Gase mit (besonders) schlechter Wärmeleitfähigkeit entwickeln, da diese Gase nach dem Erstarren der Glasschmelze und der Ausbildung des Glasschaums in den Bläschen/Zellen eingeschlossen bleiben und dort im Gebrauchsfall des Geräts oder Geräte-/Bauteils bzw. der Maschine/Anlage dann die Wärme (besonders) schlecht weiter geben (können). Menge, Art und Verteilung der Treibmittel sind so zu wählen, daß in Kombination mit den anderen Parametern des Prozesses (Glasart, Temperatur/Zeitprofil) ein(e) geschlossen-zellige(r) Schaumbeschichtung (Schaum) entsteht.

Erfindungsgemäß zu verwendende Treibmittel sind Silikonharze oder oligomere oder monomere Vorstufen von diesen (Silane, die wenigstens eine Si-C-Bindung aufweisen, die sich bei Temperaturen um T_{g}, also in bevorzugter Weise bei 400 bis 600°C, zersetzen, da T_{g} der meisten Emails in diesem Bereich liegt), insbesondere in wäßriger Dispersion. Wenn das Gemisch aus Glasrohstoff, Treibmittel und anderen Beimischungen (Additive) nass aufgetragen werden soll (bzgl. Art der Auftragung siehe weiter unten), sollte das Treibmittel in Wasser löslich oder gut dispergierbar (homogen verteilbar) sein, wenn das System zum Auftragen ein wäßriges ist. Ist es aber ein organisches auf z.B. Alkoholbasis, sollte das Treibmittel so gewählt werden, daß es sich in der alkoholischen Phase gut verteilen oder lösen lässt.

Zur weiteren Erhöhung des Wärmedurchgangswiderstands des erfindungsgemäßen Isoliermaterials können dem Glasrohstoff Metallflitter (erhöhen die Wärmereflexion, somit auch erhöhter Wärmedurchgangswiderstand) und IR-Trübungsmittel (erhöhen die Absorption, somit ebenfalls erhöhter Wärmedurchgangswiderstand) zugesetzt werden. Weitere geeignete die Wärmereflexion erhöhende Substanzen sind hohle Metallkugeln bzw. -kügelchen sowie reflektierend beschichtete Teilchen (eines Durchmessers von 1-1000, vorzugsweise von 1-300 µm) oder beliebige Gemische von diesen, ggf. einschließlich der Metallflitter. Geeignete IR-Trübungsmittel sind z.B. Zirkondioxid (ZrO₂), Titandioxid (TiO₂), SiO₂ oder beliebige Gemische dieser Oxide. Bevorzugte Größen der Trübungsmittel(teilchen) sind wiederum Durchmesser von 1-1000, vorzugsweise von 1-300 µm.

Die Auftragung des zu verschäumenden Gemisches auf die Substrat-Oberfläche, z.B. die Außenwand der Backofenmuffel, kann grundsätzlich nach jedem Emaillier-Verfahren erfolgen. Solche Verfahren sind beschrieben in dem Lehrbuch von Petzold und Pöschmann, insbesondere Abschnitt 14 auf den Seiten 224-246. Eine erfindungsgemäß bevorzugte Auftragungsart ist der Nassauftrag (Nassspritzen), insbesondere der Nassauftrag auf wäßriger Basis, wobei die Glasteilchen sowie das Treibmittel und die weiteren Additive möglichst homogen verteilt vorliegen. Der nasse Auftrag wird vor dem Erhitzen getrocknet. Auch der Vorgang des Trocknens ist grundsätzlich bekannt und kann z.B. erfolgen, wie es in Abschnitt 15 in Petzold und Pöschmann, Email und Emailliertechnik, Springer-Verlag, Berlin, Heidelberg, New York, London, Paris, Tokyo (1987), auf den Seiten 246-252 beschrieben ist. Erfindungsgemäß weiterhin bevorzugte Auftragungsarten sind der elektrostatische (Pulver-)Auftrag (Pulverelektrostatik), wobei ein möglichst homogenes Gemisch aus Glasrohstoff, Treibmittel/Treibmittel-Gemisch und Additiven feinst verteilt auf die zu beschichtende Oberfläche aufgesprüht wird (siehe auch Petzold und Pöschmann, insbesondere Abschnitt 14, Seiten 239-242), und die Elektrophorese (siehe auch Petzold und Pöschmann, Seiten 235-237).

Als Additive werden alle solche Substanzen bzw. Komponenten bezeichnet, die dem Gemisch zugefügt werden, (i) damit der Vorgang des Auftragens besser ablaufen kann, die Applikation also vereinfacht wird, dadurch daß sich das Gemisch, sei es flüssig oder pulverisiert, auch an Ecken und Kanten, gleichmäßig auftragen lässt, (ii) damit die Beschichtung auf der Substrat-Oberfläche eine ausreichend gute Haftung erhält (dazu siehe unten, Seite 9), (iii) damit organische Beimengungen des Glasrohstoffes in der Schmelze oxidiert und Farbveränderungen oder Mißfärbungen vermieden werden. Weiterhin zählen zu den Additiven solche Substanzen, die aus rheologischen oder brenntechnischen Gründen Verwendung finden. Zu den Additiven zählen Kobaltoxid (CoO, Co₂O₃, Co₃O₄) und Nickeloxid (NiO, Ni₂O₃) als Haftmittel, kaolinitische Tone und Bentonite als Schwebestoffe, Pottasche oder Borax als Korrosionsinhibitoren und ggf. visuelle Trübungsmittel. Weitere Additive sind einerseits organische Polymere, die die Festigkeit nach dem Trocknen erhöhen (z.B. Cellulosen). Im speziellen Fall der Wärmeisolierung können dem Ausgangsgemisch auch Additive zur IR-Reflexion (Metallflitter) und-Absorption (IR-Trübung) zugesetzt werden. Weitere Additive sind schließlich in Petzold und Pöschmann, insbesondere Abschnitt 7, Seiten 102-122, angegeben.

Die Auswahl der Additive bzw. ihre Kombination ist dem einschlägigen Fachmann zwar grundsätzlich bekannt, für die Feinabstimmung bedarf es aber grundsätzlich zusätzlicher und gelegentlich umfangreicher Tests, um die optimale Kombination der Stoffe sowie ihre optimale Konzentration zu ermitteln.

Ein wesentlicher Punkt bei der Beschichtung, wie sie erfindungsgemäß mit anorganischen Schäumen auf der Basis von Glas vorgenommen werden soll, besteht darin, daß die Beschichtung natürlich auch auf der Substrat-Oberfläche haften muss. Delaminationen sind unbedingt zu vermeiden, weil durch sie die isolierende Wirkung beeinträchtigt wird bzw. verloren geht.

Die Haftung des Schaumes auf dem jeweiligen Untergrund ist mit entscheidend für die Funktion der Isolation. Im Betrieb von thermisch beanspruchten Geräten können durch thermische Dehnung ausgelöste Bewegungen sowie Unterschiede im thermischen Ausdehnungsverhalten von Substrat und Schaumbeschichtung Beschädigungen der Beschichtung verursachen. Im Extremfall führen schlecht angepaßte Ausdehnungskoeffizienten verbunden mit einer schlechten Haftung zur Delaminierung der Isolation.

Eine Haftung im Sinne der vorliegenden Erfindung gewährleistet die dauerhafte Fixierung des Schaums auf dem Substrat nach der Herstellung und im Betrieb des Gerätes. Die Haftung läßt sich ohne Berücksichtigung thermischer Effekte wie folgt quantifizieren:
Eine Fläche A, gewählt aus der Schaumdicke d mit A = 2d in einer Schaum beschichteten planaren Fläche, wird mechanisch eingeschnitten. Anschließend wird die Oberfläche der ausgeschnittenen Fläche mit einem Zugprüfgerät senkrecht durch eine Klebung verbunden.
Die meßbare Haftung ist erfindungsgemäß größer als oder gleich 0,2, vorzugsweise wenigstens 0,5 oder 1 N/cm². Vorzugsweise ist die Haftung größer als oder gleich 2 N/cm². Besonders bevorzugterweise ist die Haftung größer als oder gleich 3, 5, 7, 8, oder 10 N/cm²_{.}

Ein zerstörungsfreies Herauslösen des ausgeschnittenen Bereiches ist nur möglich, sofern die innere Festigkeit des Schaumes seine Haftfestigkeit übersteigt. Dies ist in vielen Fällen jedoch nicht gegeben. Aus den Kräften, die angewandt werden müssen, um den Bruch des Schaumes zu bewirken, kann jedoch auf seine Mindesthaftfestigkeit zum Substrat geschlossen werden.

Zu einer guten Haftung können einerseits die schon genannten Additive ihren Beitrag leisten, andererseits müssen die Ausdehnungskoeffizienten des Glases (der Beschichtung) und z.B. des Metalls (der Substrat-Oberfläche) aufeinander abgestimmt sein. Unterschiedliche Ausdehnungen von beiden (Beschichtung bzw. Substrat) führen leicht zu Rissen, Ausmuschelungen oder auch Abplatzern. Risse im Glasschaum/in der Beschichtung sind die Folge von Zugspannungen, die z.B. beim Aufheizen im Betrieb auftreten können, da die Ausdehnung des Glases in der Regel niedriger ist als die des Metalls. Abplatzer und Ausmuschelungen hingegen sind die Folge von Druckspannungen, die z.B. beim Abkühlen auftreten können. Grundsätzlich ist der Schaumwerkstoff aufgrund seines niedrigeren Elastizitätsmoduls (E-Moduls) und seiner niedrigeren Sprödigkeit hinsichtlich dieser Fehler weniger kritisch als eine entsprechende blasenarme Email-/bzw. Glasschicht.

Eine weitere (bevorzugte) Möglichkeit, die Haftung von Glas auf Metall zu erhöhen, besteht darin, die Substrat-Oberfläche vorzubehandeln. Solche Vorbehandlungen können grundsätzlich chemisch, elektrochemisch oder mechanisch erfolgen. Geeignete Verfahren sind in Petzold und Pöschmann auf den Seiten 202-223 beschrieben. Weiteres grundlegendes Wissen des einschlägigen Fachmannes ist nachzulesen auf den Seiten 58-76 dieses Lehrbuchs. Weiterhin kann auch eine weitere Glas- bzw. Emailschicht zur Verbesserung der Haftung unter das Schaumemail gelegt werden.

Besonders bevorzugt ist es, eine Zwischenschicht aufzutragen, die sich von der (äußeren) Isolierschicht lediglich darin unterscheidet, daß sie sich bezüglich des Treibmittels qualitativ und/oder quantitativ von der (äußeren) Isolierschicht unterscheidet. Vorzugsweise handelt es sich um dasselbe Treibmittel, das jedoch in der Zwischenschicht in geringerer Konzentration - oder gar nicht - vorliegt als in der Isolierschicht. Nach dem Aufschäumen handelt es sich natürlich nicht mehr um das Treibmittel, sondern um Poren, so daß die an die Substrat-Oberfläche angrenzende (Zwischen-)Schicht (die ebenfalls als eine Isolierschicht zu bezeichnen ist) ärmer an Poren ist als die (äußere) Isolierschicht (Treibmittel- bzw. Porengradient von Substrat-Oberfläche nach außen). Ein solcher Gradient läßt sich am besten mittels eines Mehrfachauftrags und eines gemeinsamen Brandes beider Aufträge (Schichten) realisieren.

Eine weitere Möglichkeit besteht darin, thermisch gespritzte Schichten geeigneter Porosität/Rauheit als Haftgrund aufzubringen.

Die Dicke der Isolationsschicht wird, um spannungsinduzierte Fehler zu reduzieren, möglichst dünn gewählt. Andererseits sollte aus Gründen der thermischen Isolierung die Schichtdicke möglichst hoch sein. Geeignete Schichtdicken liegen im Bereich 1-20 mm Schaumdicke.

Nach dem Vorgang des Auftragens bzw. des Trocknens im Fall des Nassauftrags erfolgt das Aufschäumen des Gemisches (aus Glasrohstoffen, Treibmitteln, Additiven) unter Freisetzung des/der Treibmittel/s durch Brand/Brennen um oder oberhalb T_{g}, dem Transformationsbereich des Glases, und abschließendes Abkühlen. Der Fachmann weiß das richtige Temperatur-/Zeitfenster an Hand der Schmelz- und Erweichungscharakteristika des Glases in Kombination mit der Freisetzung von Gasen aus dem/n Treibmitte/n abzustimmen. Nach einer bevorzugten Ausführungsform wird so verfahren, daß die maximale Temperatur des Ofens, in dem der Brand erfolgt, zunächst auf eine Temperatur von etwa 100°C oberhalb T_{g} eingestellt wird und dann das zu beschichtende Bauteil etc. mit dem Biskuit (dem aufgetragenen, getrockneten Gemisch aus Glasrohstoff, Treibmittel(n) und Additiv(en)) eingefahren wird. In der Regel werden übliche atmosphärische Durchlauföfen benutzt, die Zeiten des Brennens betragen 20-60 min. Sofern der Fachmann einzelne Parameter des Brennens nicht ohne weiteres ermitteln kann, findet er allgemein wesentliche Hinweise, wie das Brennen zu erfolgen hat, in dem Lehrbuch von Petzold und Pöschmann, insbesondere in Abschnitt 16 auf den Seiten 253-273.

Die Auswahl der Einzelkomponenten, insbesondere des Glases, des auf die Oberfläche aufzutragenden Gemisches weiß der Fachmann auszuwählen. Dabei geht er aus von dem Material der zu beschichtenden Oberfläche. Dieses ist bei Backofenmuffeln üblicher Weise Emaillierstahl oder emaillierter Stahl. Im Fall der emaillierten Muffel muss sich das Glas, das für die Beschichtung verwendet wird, bei einer Temperatur von unter 550°C oder über etwa 750/780°C verarbeiten lassen, da sich im Temperaturbereich von 550-750/780°C Risse im Email bilden, die sich nicht mehr schließen. Demgegenüber entstehen diese Risse bei Temperaturen unterhalb 550°C erst gar nicht bzw. schließen sich wieder, wenn bei oberhalb 750/780°C gearbeitet wird.

Ist dagegen das Substrat Glaskeramik, die einen sehr niedrigen Ausdehnungskoeffizienten hat, z.B. Ceranglas (und nicht Metall), ist das Schaumglas der Wahl für die erfindungsgemäß aufzutragende Beschichtung ein Glas, das ebenfalls einen kleinen Ausdehnungskoeffizienten hat. Der Schäumungsprozess (Brand) erfolgt in diesem Fall vorzugsweise bei 500 bis 700°C.

Nachfolgend wird die Erfindung an Hand eines Beispiels noch etwas ausführlicher erklärt.

### Beispiel 1

Ausgangspunkt ist ein wäßriger Schlicker auf Basis der Glasfritte AT 6118 (Fa. PEMCO). Diesem werden, bezogen auf die Glasfritte, 10 Masse-% an Silikonharzemulsion M50 E der Fa. Wacker Chemie zugesetzt. Der Auftrag des Gemisches erfolgt durch Spritzen. Die Trocknung erfolgt bei 250°C für 5 min. im Durchlauftrockner. Anschließend wird im Durchlauf bei einer Peaktemperatur von 550°C (20 min) der Schaum erzeugt. Der Ofendurchlauf inkl. Abkühlen beträgt 35 min. Als Substrat wird eine emaillierte Backmuffel eingesetzt. Der Trockenauftrag liegt bei einer Schichtdicke von 400 µm. Die Schaumbeschichtung hat nach dem Prozeß eine Stärke von 10 mm. Die Muffel wurde durchgehend außen beschichtet. Flächen, Rippen und abstehende Teile zeigten ein gleichmäßiges Beschichtungsergebnis. Der Schaum war geschlossen-zellig und wies Zellengrößen von 0.1 bis 1 mm auf. Der Schaum ist nach dem Prozess grifffest.

## Patentansprüche

1. Verfahren zur Herstellung eines dauerhaft thermisch isolierten Gerätes, umfassend die Schritte:
(i) Auftragen von einem oder mehreren Glasrohstoff(en) und einem oder mehreren Treibmittel(n) und einem oder mehreren Additiv(en) trocken oder nass auf das zu isolierende Gerät,
(ii) Trocknen des zu isolierenden Geräts im Fall eines Nassauftrags,
(iii) Erhitzen des beschichteten Geräts auf eine Temperatur die bei oder oberhalb der Glastransformationstemperatur T_{g} des Glases liegt, wobei das Treibmittel bei bzw. etwas oberhalb T_{g} Gase freisetzt, und somit thermisches Umwandeln des Glasrohstoffs mit Treibmittel(n) und Additiv(en) in eine anorganische Schaumstruktur und anschließendes Abkühlen,
mit dem Ergebnis, dass die erzeugte Schaumbeschichtung eine Haftfestigkeit von wenigstens 0,2 N/cm² aufweist,
wobei als Treibmittel ein Silikonharz oder eine oligomere/monomere Vorstufe davon verwendet wird, und wobei die Schaumbeschichtung in einer Dicke von 1 bis 30 mm, vorzugsweise 2 bis 15 mm, besonders bevorzugt 3 bis 10 mm erzeugt wird.

2. Verfahren nach Anspruch 1, wobei das Silikonharz in Wasser dispergierbar ist.

3. Verfahren nach Anspruch 1 oder 2, wobei die oligomere/monomere Vorstufe des Silikonharzes ein Silan mit wenigstens einer Si-C-Bindung ist, die sich bei Temperaturen um T_{g}, insbesondere bevorzugt bei 400°C bis 600°C, zersetzt.

4. Verfahren nach einem der vorhergehenden Ansprüche, **dadurch gekennzeichnet, dass** die Poren geschlossen sind und dass in ihnen ein Unterdruck herrscht.

5. Verfahren nach einem der vorhergehenden Ansprüche, wobei das/die Additiv/e Mittel zur IR-Reflexion bzw. -Absorption ist/sind.

6. Verfahren nach einem der vorhergehenden Ansprüche, wobei als Substrat Metall, insbesondere Stahl; Glas, Glaskeramik oder Keramik eingesetzt wird.

7. Verfahren nach einem der vorhergehenden Ansprüche, wobei Infrarot-Strahlung zum Brand/ Schäumen benutzt wird.

8. Verfahren nach einem der vorhergehenden Ansprüche, **dadurch gekennzeichnet, daß** das Gerät ein Gegenstand ist, der gegenüber seiner Umgebung thermisch isoliert werden soll, um auf diese Weise den Energiebedarf, der für die Erwärmung/das Erhitzen, das Warmhalten oder Abkühlen des Geräts nötig ist, zu reduzieren, wobei das Gerät ein Temperatur belastetes Teil eines KFZ, ein großes oder kleines Hausgerät oder dessen Zubehör ist, das bei einer von der Raumtemperatur verschiedenen Betriebstemperatur, vorzugsweise bei oberhalb 150°C, betrieben wird.

9. Verfahren nach Anspruch 8, **dadurch gekennzeichnet, daß** das Gerät ein Ofen, eine Backofenmuffel, ein Backkasten, ein Backraumteiler, eine Mulde oder eine ähnliche Kochstelle, eine Heizung, die auf Grund der auftretenden Temperaturen eine Isolierung mit Kunststoffen ausschließt, eine Friteuse oder ein Toaster ist.

10. Dauerhaft thermisch isoliertes Gerät, dessen Isolierung eine durchgängige und gleichmäßige anorganische Schaumbeschichtung mit Poren aufweist, die mit wenigstens 0,2 N/cm² auf der Oberfläche des Geräts haftet, und die eine Dicke von 1 bis 30 mm, vorzugsweise 2 bis 15 mm, besonders bevorzugt 3 bis 10 mm aufweist.

11. Gerät nach Anspruch 10, wobei die Poren zu mindestens 50% geschlossen-zellig, vorzugsweise zu mindestens 75% geschlossen-zellig sind und einen Unterdruck aufweisen.

12. Gerät nach Anspruch 10 oder 11, wobei die Schaumbeschichtung ein Additiv/Mittel zur IR-Reflexion bzw. -Absorption aufweist.

13. Gerät nach einem der Ansprüche 10 bis 12, wobei das Substrat Metall, insbesondere Stahl; Glas, Glaskeramik oder Keramik ist.

14. Gerät nach einem der Ansprüche 10 bis 13, wobei das Gerät ein Temperatur belastetes Teil eines KFZ, ein großes oder kleines Hausgerät oder dessen Zubehör ist, das bei einer von der Raumtemperatur verschiedenen Betriebstemperatur, vorzugsweise bei oberhalb 150°C, betrieben wird.

15. Gerät nach Anspruch 14, wobei das Gerät ein Ofen, eine Backofenmuffel, ein Backkasten, ein Backraumteiler, eine Mulde oder eine ähnliche Kochstelle, eine Heizung, die auf Grund der auftretenden Temperaturen eine Isolierung mit Kunststoffen ausschließt, eine Friteuse oder ein Toaströster ist.

## Claims

1. Method of producing a permanently thermally insulated appliance, comprising the steps:
i) coating one or more glass raw materials and one or more blowing agents and one or more additives in dry or wet form on the appliance to be insulated,
ii) drying the appliance, which is to be insulated, in the case of a wet coating,
iii) heating the coated appliance to a temperature lying at or above the glass transformation temperature T_{g} of the glass, wherein the blowing agent liberates gases at or slightly above T_{g} and thus thermal conversion of the glass raw material with blowing agent or agents and additive or additives into an inorganic foam structure and subsequent cooling down,
with the result that the foam coating produced has an adhesion strength of at least 0.2 N/cm²,
wherein a silicon resin or an oligomer/monomer precursor thereof is used as blowing agent and wherein the foam coating is produced in a thickness of 1 to 30 millimetres, preferably 2 to 15 millimetres, particularly preferably 3 to 10 millimetres.

2. Method according to claim 1, wherein the silicon resin can be dispersed in water.

3. Method according to claim 1 or 2, wherein the oligomer/monomer precursor of the silicon resin is a silane with at least one Si-C compound which decomposes at temperatures around T_{g}, particularly preferably at 400° C to 600° C.

4. Method according to any one of the preceding claims, **characterised in that** the pores are closed and that a sub-atmospheric pressure prevails therein.

5. Method according to any one of the preceding claims, wherein the additive or additives is or are means for reflection or absorption of infrared radiation.

6. Method according to any one of the preceding claims, wherein metal, particularly steel, glass, glass-ceramic or ceramic, is used as substrate.

7. Method according to any one of the preceding claims, wherein infrared radiation is used for firing/foaming.

8. Method according to any one of the preceding claims, **characterised in that** the appliance is an article which is to be thermally insulated relative to the environment thereof in order to thereby reduce energy consumption needed for warming/heating, keeping warm or cooling the appliance, wherein the appliance is a part, which is subject to temperature of a motor vehicle or a large or small domestic appliance or an accessory thereof which is operated at an operating temperature differing from room temperature, preferably at above 150° C.

9. Method according to claim 8, **characterised in that** the appliance is an oven, a baking oven muffle, a baking box, a baking chamber divider, a hob or similar cooking place, a heater which due to temperatures which occur excludes insulation by plastics material, a fryer or a toaster.

10. Permanently thermally insulated appliance, the insulation of which comprises a continuous and homogenous inorganic foam coating with pores, which adheres by at least 0.2 N/cm² to the surface of the appliance and which has a thickness of 1 to 30 millimetres, preferably 2 to 15 millimetres, particularly preferably 3 to 10 millimetres.

11. Appliance according to claim 10, wherein the pores have an at least 50% closed cell structure, preferably at least 75% closed cell structure, and have a sub-atmospheric pressure.

12. Appliance according to claim 10 or 11, wherein the foam coating has an additive/means for reflection or absorption of infrared radiation.

13. Appliance according to any one of claims 10 to 12, wherein the substrate is metal, particularly steel, glass, glass-ceramic or ceramic.

14. Appliance according to any one of claims 10 to 13, wherein the appliance is a part, which is subject to temperature, of a motor vehicle, or a large or small domestic appliance or an accessory thereof, which is operated at an operating temperature differing from room temperature, preferably at above 150° C.

15. Appliance according to claim 14, wherein the appliance is an oven, a baking oven muffle, a baking box, a baking chamber divider, a hob or similar cooking place, a heater which due to temperatures which occur excludes insulation by plastics material, a fryer or a toaster.

## Revendications

1. Procédé de fabrication d'un appareil calorifugé de manière durable, comprenant les étapes:
(i) application sèche ou humide d'une ou de plusieurs matières en tube de verre et d'un ou de plusieurs agents moussants et d'un ou de plusieurs additifs sur l'appareil à isoler,
(ii) séchage de l'appareil à isoler en cas d'une application humide,
(iii) échauffement de l'appareil enduit à une température située à ou au-delà de la température de transformation du verre T_{g}, l'agent moussant libérant des gaz à resp. légèrement au-delà de T_{g}, et par conséquent transformation thermique de la matière en tube de verre avec l'agent moussant/les agents moussants et l'additif/les additifs en une structure de mousse inorganique et refroidissement successif,
avec pour résultat que le revêtement par mousse obtenu présente une adhérence d'au moins 0,2 N/cm²,
une résine silicone ou une phase préparatoire oligomère/monomère de celle-ci étant utilisée en tant qu'agent moussant, et le revêtement par mousse étant produit dans une épaisseur de 1 à 30 mm, de préférence de 2 à 15 mm, de manière particulièrement préférée de 3 à 10 mm.

2. Procédé selon la revendication 1, la résine silicone étant dispersible dans l'eau.

3. Procédé selon la revendication 1 ou 2, la phase préparatoire oligomère/monomère de la résine silicone étant un silane ayant au moins une liaison Si-C qui se décompose à des températures situées autour de T_{g}, notamment de préférence autour de 400°C jusqu'à 600°C.

4. Procédé selon l'une quelconque des revendications précédentes, **caractérisé en ce que** les pores sont fermés et **en ce qu'**il y règne une sous-pression.

5. Procédé selon l'une quelconque des revendications précédentes, l'additif/les additifs étant des moyens pour la réflexion infrarouge resp. l'absorption infrarouge.

6. Procédé selon l'une quelconque des revendications précédentes, du métal, notamment de l'acier, du verre, de la vitrocéramique ou de la céramique étant utilisés en tant que substrat.

7. Procédé selon l'une quelconque des revendications précédentes, le rayonnement infrarouge étant utilisé pour la cuisson/le moussage.

8. Procédé selon l'une quelconque des revendications précédentes, **caractérisé en ce que** l'appareil est un objet qui doit être calorifugé par rapport à son environnement, afin, de cette manière, de réduire le besoin d'énergie qui est nécessaire pour l'échauffement/la mise en température, le maintien de chaleur ou le refroidissement de l'appareil, l'appareil étant une pièce, soumise à la température, d'un véhicule automobile, un grand ou petit appareil ménager ou un accessoire de celui-ci qui fonctionne à une température de service différente de la température ambiante, de préférence au-delà de 150°C.

9. Procédé selon la revendication 8, **caractérisé en ce que** l'appareil est un four, un moufle de four de cuisson, une boîte de cuisson, un système diviseur de l'enceinte de cuisson, une table de cuisson ou un endroit de cuisson similaire, un chauffage qui, en raison des températures se manifestant, exclut une isolation avec des matières synthétiques, une friteuse ou un grille-pain.

10. Appareil calorifugé de manière durable, dont l'isolation présente un revêtement par mousse anorganique, continu et régulier, ayant des pores, lequel adhère sur la surface de l'appareil avec au moins 0,2 N/cm², et qui présente une épaisseur de 1 à 30 mm, de préférence de 2 à 15 mm, de manière particulièrement préférée de 3 à 10 mm.

11. Appareil selon la revendication 10, les pores étant pour au moins 50% cellulairement fermés, de préférence pour au moins 75% cellulairement fermés et présentant une sous-pression.

12. Appareil selon la revendication 10 ou 11, le revêtement par mousse présentant un additif/un moyen pour la réflexion infrarouge resp. l'absorption infrarouge.

13. Appareil selon l'une quelconque des revendications 10 à 12, le substrat étant du métal, notamment de l'acier, du verre, de la vitrocéramique ou de la céramique.

14. Appareil selon l'une quelconque des revendications 10 à 13, l'appareil étant une pièce, soumise à la température, d'un véhicule automobile, un grand ou petit appareil ménager ou un accessoire de celui-ci qui fonctionne à une température de service différente de la température ambiante, de préférence au-delà de 150°C.

15. Appareil selon la revendication 10, l'appareil étant un four, un moufle de four de cuisson, une boîte de cuisson, un système diviseur de l'enceinte de cuisson, une table de cuisson ou un endroit de cuisson similaire, un chauffage qui, en raison des températures se manifestant, exclut une isolation avec des matières synthétiques, une friteuse ou un grille-pain.
